Europäisches Patentamt

European Patent Office

Office européen des brevets

(19)

(11) Veröffentlichungsnummer : **0 121 659**
**B1**

# (12) EUROPÄISCHE PATENTSCHRIFT

(45) Veröffentlichungstag der Patentschrift :
10.09.86

(21) Anmeldenummer : 84100773.5

(22) Anmeldetag : 25.01.84

(51) Int. Cl.⁴ : **B 65 G 65/28**

(54) Vorrichtung zur Rückverladung von losem Schüttgut.

(30) Priorität : 08.03.83 DE 3308202

(43) Veröffentlichungstag der Anmeldung :
17.10.84 Patentblatt 84/42

(45) Bekanntmachung des Hinweises auf die Patenterteilung : 10.09.86 Patentblatt 86/37

(84) Benannte Vertragsstaaten :
BE DE FR GB

(56) Entgegenhaltungen :
DE-B- 2 005 147
GB-A- 2 102 376
DE-Z-"Aufbereitungs-Technik", 1974/Heft II, Seiten
620 bis 625

(73) Patentinhaber : Krupp Polysius AG
Graf-Galen-Strasse 17
D-4720 Beckum (DE)

(72) Erfinder : Ganss, Werner, Ing. grad.
Elisabethstrasse 29
D-4722 Ennigerloh (DE)

(74) Vertreter : Tetzner, Volkmar, Dr.-Ing. Dr. Jur.
Van-Gogh-Strasse 3
D-8000 München 71 (DE)

EP 0 121 659 B1

· **Beschreibung**

Die Erfindung betrifft eine Vorrichtung entsprechend dem Oberbegriff des Anspruches 1, wie diese Vorrichtung in der GB-A-2 102 376 dargestellt ist.

Schüttgut-Rückladevorrichtungen für langgestreckte Schüttgutlager bzw. Schüttguthalden gehören in verschiedenen Ausführungen zum Stand der Technik. Bekannt sind beispielsweise Ausführungen mit sog. Portal- oder Seitenkratzern, die seitlich der Halde in deren Längsrichtung fahren und dabei Schüttgut von der Haldenlängsseite abbauen (DE-Z « Aufbereitungs-Technik », 1974, Heft 11, Seite 620 bis 625, Bild 1 bis 3).

Bei einer derartigen Ausführung ist es auch bekannt (DE-B-2 005 147), an einem die Schüttguthalde in Querrichtung überspannenden Portal einen mit der Oberseite der Halde zusammenwirkenden Entspeicherungskratzer sowie einen mit einer Haldenlängsseite zusammenwirkenden Nebenkratzer anzuordnen.

Zum Stand der Technik gehören weiterhin Rückladevorrichtungen der im Oberbegriff des Anspruches 1 vorausgesetzten Art, wie sie in der DE-Z « Aufbereitungs-Technik », 1974, Heft 11, Seite 620 bis 625, Bild 8 bis 12 sowie in der GB-A-2 102 376 veranschaulicht sind. Hierbei ist an der Haldenstirnseite ein Brückenkratzer angeordnet, der aus einer am stirnseitigen Haldenfuß angeordneten Brücke, einem von der Brücke getragenen, längs der Haldenstirnseite hin- und herverfahrbaren Böschungsräumgerät sowie einem gleichfalls von der Brücke getragenen Querförderer besteht. Diese bekannten Rückladevorrichtungen können stets nur zwei neben- oder hintereinander angeordnete Halden bedienen.

Der Erfindung liegt daher die Aufgabe zugrunde, eine Vorrichtung der im Oberbegriff des Anspruches 1 genannten Art mit verhältnismäßig einfachen konstruktiven Mitteln so auszubilden, daß sie auch bei mehr als zwei in Längsrichtung hintereinander angeordneten Schüttguthalden eingesetzt werden kann.

Diese Aufgabe wird erfindungsgemäß durch die kennzeichnenden Merkmale des Anspruches 1 gelöst.

Bei dieser erfindungsgemäßen Ausführung ist es mit einer verhältnismäßig einfachen konstruktiven Maßnahme, nämlich durch das gemeinsame Anheben von Brücke mit Böschungsräumgerät und Querförderer über die maximale Schüttguthöhe der Schüttguthalden (Haldenfirst) zu jeder beliebigen Zeit möglich, die Schüttgut-Rückverladevorrichtung aus dem Bereich der Stirnseite einer Schüttguthalde etwa zur nächsten oder übernächsten Schüttguthalde zu versetzen, ohne daß dazu die Schüttgut-Rückverladung der zuvor bearbeiteten Schüttguthalde abgeschlossen sein muß, wie es bei den bisherigen Ausführungen der Fall ist. Die Vertikalführungen für die Brücke sorgen dabei für eine zuverlässige Halterung und Führung der Brücke und der darin angeordneten Teile, und zwar sowohl während der Rückverladearbeit als auch während des Hochfahrens der Brücke.

Mit der erfindungsgemäßen Vorrichtung wird zugleich der bei einem stirnseitigen Haldenabbau gegebene günstige Effekt einer Vergleichmäßigung bzw. Homogenisierung des rückzuladenden Schüttgutes beibehalten, da das eingestapelte Schüttgut stirnseitig vom ganzen Haldenquerschnitt entnommen und während des Lösens und Abförderns intensiv gemischt wird.

Weitere Einzelheiten der Erfindung ergeben sich aus den Unteransprüchen sowie aus der folgenden Beschreibung einiger in der Zeichnung veranschaulichter Ausführungsbeispiele. In der vereinfacht gehaltenen Zeichnung zeigen

Figur 1 eine Queransicht von einer ersten Ausführungsform der Rückverladevorrichtung, bei der die Brücke von einem Portal getragen wird ;

Figur 2 eine Querschnittsansicht etwa entlang der Linie II-II in Fig. 1 ;

Figur 3 eine Querschnittsansicht von einem zweiten Ausführungsbeispiel ;

Figur 4 eine Seitenansicht einer weiteren Ausführungsform der Vorrichtung, bei der die Brücke an vertikalen Säulen aufgehängt und geführt ist.

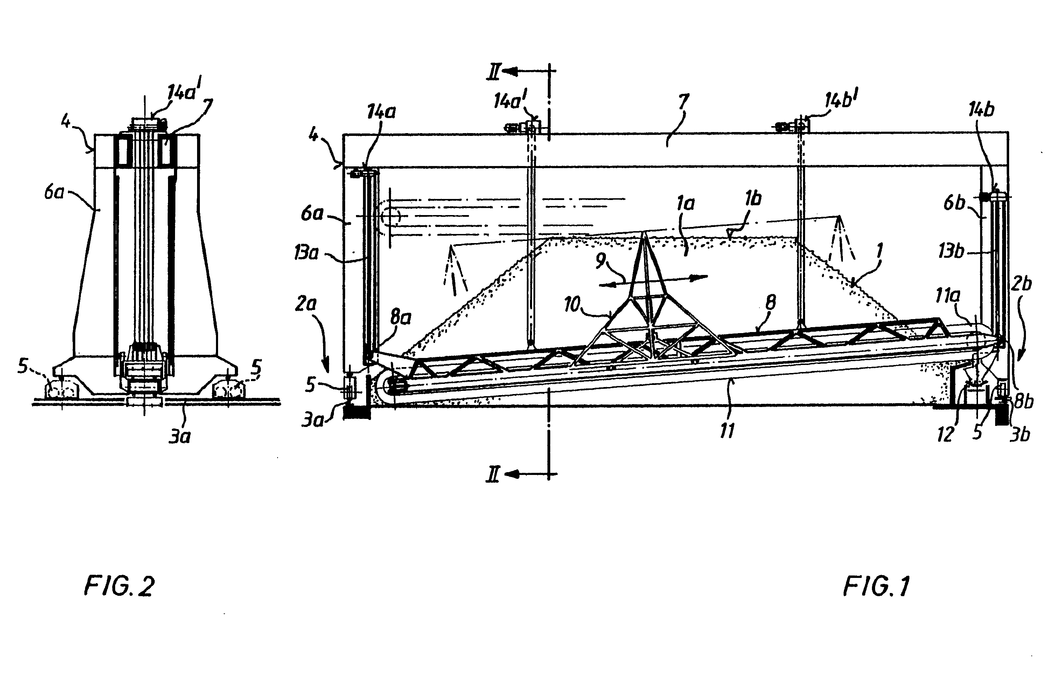

Bei dem in den Fig. 1 und 2 veranschaulichten ersten Ausführungsbeispiel ist lediglich die Stirnseite 1a von einer Schüttguthalde 1 zu erkennen, die zu einem Schüttgutlager gehört, das vorzugsweise drei oder mehr in Längsrichtung hintereinander liegende Schüttguthalden aufweist. Auf beiden Längsseiten 2a, 2b des insgesamt nicht näher veranschaulichten Schüttgutlagers sind parallel dazu verlaufende übliche Verfahrschienen 3a bzw. 3b verlegt. Auf diesen Verfahrschienen 3a, 3b ist in diesem Falle ein das Schüttgutlager in Querrichtung überspannendes Portal 4 mittels Laufräder 5 verfahrbar. Das Portal 4 stützt sich dabei mittels seitlicher Portalbeine 6a, 6b auf den zugehörigen Rädern 5 in bekannter Weise ab. Oberhalb der maximalen Schütthöhe 1b der Schüttguthalde 1 sind die Portalbeine 6a, 6b durch einen Portalquerträger 7 stabil miteinander verbunden.

Von dem Portal 4 wird eine das Schüttgutlager bzw. die Schüttguthalde 1 in Querrichtung ebenfalls überspannende Brücke 8 getragen, die ihrerseits zumindest ein in Richtung des Doppelpfeiles 9 quer zur Haldenstirnseite 1a hin- und herverfahrbares Böschungsräumgerät 10 sowie einen sich ebenfalls im wesentlichen quer über die ganze Lagerbreite erstreckenden und mit dem Böschungsräumgerät 10 zusammenarbeitenden Querförderer 11 trägt. Sowohl das Böschungsräumgerät 10 als auch der Querförderer 11 kann in jeder geeigneten und an sich bekannten Ausführungsform hergestellt sein. In Fig. 1 ist das Böschungsräumgerät 10 in Form eines Kratzrechens vorgesehen, während der Querförderer 11 durch einen Kettenkratzer gebildet ist, der von der einen Lagerlängsseite 2a zur anderen Lagerlängsseite 2b leicht ansteigt und dessen erhöhtes Gutabgabeende 11a an der Lagerlängsseite 2b über einem Gurtförderer 12 vorgesehen ist, dem er das von der Schüttguthalde 1 gelöste Schüttgut zuführt und der entlang der Lagerlängsseite 2b verläuft.

Nahezu über die ganze Höhe der Portalbeine 6a, 6b ist jeweils eine Vertikalführung in Form einer Führungsstange 13a bzw. 13b angeordnet. Diese vertikalen Führungsstangen 13a, 13b dienen zur Halterung und vertikalen Führung der Brücke 8 einschließlich der von ihr getragenen Teile, also insbesondere des Böschungsräumgerätes 10 und des Querförderers 11. Die Portalbeine 6a, 6b bilden sowie Tragstützen mit daran angeordneten Vertikalführungen für die Brücke 8.

An den Portalbeinen 6a, 6b ist jeder Führungsstange 13a, 13b eine Hubeinrichtung 14a, 14b zugeordnet, die jeweils an einem Führungsteil 8a bzw. 8b angreifen, der am entsprechenden Ende der Brücke 8 vorgesehen und auf den Führungsstangen 13a bzw. 13b geführt und gehaltert ist. Diese Hubeinrichtungen 14a, 14b können in jeder geeigneten Weise ausgeführt sein ; vorgezogen werden verhältnismäßig einfach anzubringende Seilzüge (evtl. auch Kettenzüge), deren Windenantrieb — wie in der Zeichnung angedeutet — am oberen Ende der Portalbeine 6a, 6b bzw. der Führungsstangen 13a, 13b angeordnet ist. Anstelle dieser Anordnung der Seilzüge könnte auch eine Anordnung von zwei oder mehreren Seilzügen 14a', 14b' mit entsprechender Verteilung an dem Portalquerträger 7 vorgesehen werden, wie es in Fig. 1 zusätzlich angedeutet ist ; bei besonders großen Spannweiten ist darüber hinaus auch eine gleichzeitige Anordnung von Seilzügen 14a, 14b und 14a', 14b' sowohl an den Portalbeinen 6a, 6b als auch am Portalquerträger 7 möglich. In jedem Falle sind die vertikalen Führungsstangen 13a, 13b und die Seilzüge 14a, 14b bzw. 14a', 14b' so ausgeführt und angeordnet, daß die Brücke 8 zusammen mit Böschungsräumgerät 10 und Querförderer 11 — wie erwähnt — bis über die maximale Schütthöhe 1b der Schüttguthalde 1 angehoben werden kann ; in entsprechender Höhe ist natürlich auch das Portal 4 mit seinen Portalbeinen 6a, 6b und seinem Querträger 7 auszuführen.

Hinsichtlich der Konstruktion des Portales 4 sei noch darauf hingewiesen, daß die beiden Portalbeine 6a, 6b zunächst so ausgeführt sein sollen, daß sie die in richtung der Schienen 3a, 3b wirkenden Arbeits- und Windkräfte aufnehmen können, während das Portalbein 6b darüber hinaus so ausgelegt sein soll, daß es noch die quer zur Schienenrichtung wirkenden Kräfte aufnehmen kann.

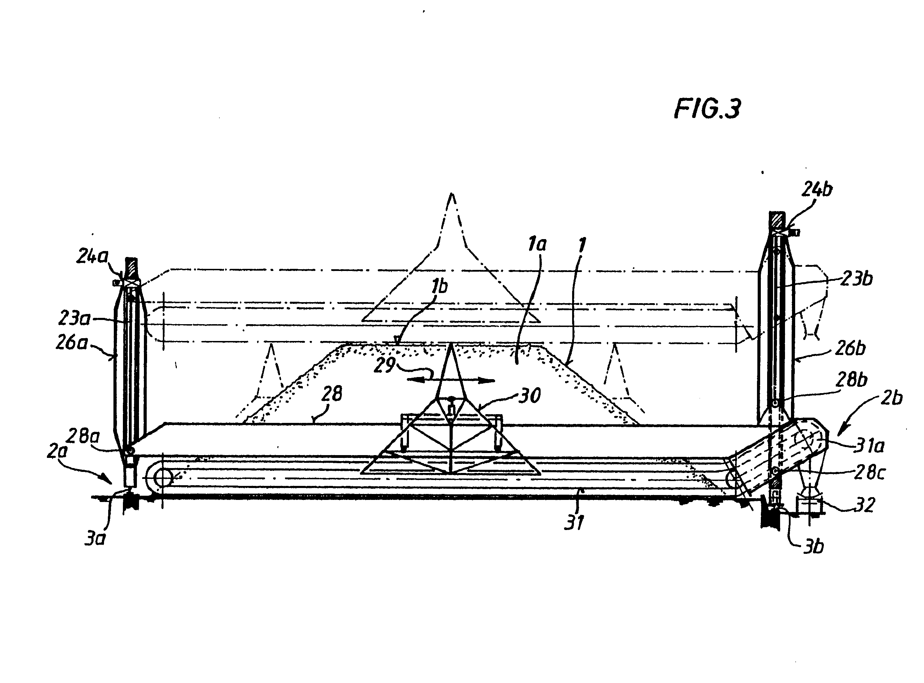

Im Gegensatz zur Ausführungsform gemäß den Fig. 1 und 2 ist beim Ausführungsbeispiel gemäß Fig. 3 kein volles Portal vorgesehen. Während auf beiden Längsseiten 2a, 2b des nur durch die Schüttguthalde 1 angedeuteten Schüttgutlagers wiederum je eine auf Schienen 3a, 3b längs verfahrbare, vertikal ausgerichtete Tragstütze 26a, 26b angeordnet ist, und zwar bei ähnlicher Ausbildung wie die Portalbeine 6a und 6b in den Fig. 1 und 2, bildet die Brücke 28 in diesem Falle gleichzeitig die Querverbindung zwischen den beiden seitlichen Tragstützen 26a, 26b. Die Brücke 28 trägt dabei wieder ein quer zur Stirnseite 1a der Schüttguthalde 1 hin- und herverfahrbares (vgl. Doppelpfeil 29) Böschungsräumgerät 30 sowie einen sich quer über die ganze Haldenstirnseite 1a erstreckenden Querförderer 31, der über den größten Teil seiner Länge etwa horizontal verläuft und nur an seinem Abgabeende 31a schräg nach oben verlaufend abgeknickt ist. Der Querförderer 31 kann wiederum als Kettenkratzer ausgebildet sein und das von ihm geförderte Gut an einem an der Lagerlängsseite 26b entlanglaufenden Gurtförderer 32 abgeben.

Die beiden seitlichen Tragstützen 26a, 26b können in ihrem grundsätzlichen Aufbau etwa gleichartig ausgeführt sein wie die Portalbeine 6a, 6b des vorhergehenden Beispieles, wobei lediglich für eine entsprechend sichere Einzelaufstellung gesorgt werden muß und die das nach oben abgeknickte Querfördererende 31a tragende Tragstütze 26b — wie in Fig. 3 zu erkennen — etwas höher ausgeführt sein muß als die andere Tragstütze 26a. Jede Tragstütze 26a, 26b besitzt somit wiederum eine als Vertikalführung vorgesehene Vertikalführungsstange 23a, 23b und einen jeder Führungsstange 23a, 23b zugeordneten Seilzug 24a, 24b als Hubeinrichtungen. Die Seilzüge 24a, 24b greifen an den zugehörigen Enden der Brücke 28 etwa im Bereich je eines Führungsteiles 28a, 28b an, mit dem die Brücke 28 an der Führungsstange 23a bzw. 23b gehaltert und vertikal geführt ist.

Aufgrund der hier gewählten Ausführung und Funktion der Brücke 28, die die einzige Verbindung zwischen den beiden Tragstützen 26a, 26b bildet, ist es zweckmäßig, daß die Brücke an der für die zusätzliche Aufnahme von Querkräften ausgelegten rechten Tragstütze 26b (mit Querfördererende 31a) über zwei mit vertikalem Abstand voneinander angebrachte Führungsteile 28b und — zusätzlich — 28c an der zugehörigen vertikalen Führungsstange 23b gehalten ist ; auf der anderen Lagerlängsseite 2a braucht die Brücke 28 dagegen nur durch einen Führungsteil 28a an der dortigen Führungsstange 23a gehaltert und geführt zu sein. Auf diese Weise kann auch während des Hubvorganges der ganzen Brückenanordnung (Brücke 28, Böschungsräumgerät 30 und Querförderer 31) bis über den Haldenfirst (maximale Schütthöhe 1b) stets die hier gewünschte rechtwinklige Lage der Brücke 28 zur Tragstütze 26b aufrechterhalten werden, damit alle quer zur Schienenrichtung auftretenden Arbeits- und Windkräfte auf die zugehörige Verfahrschiene 3b übertragen werden können. Die auf der anderen Lagerlängsseite 2a verfahrbar angeordnete Trägstütze 26a bildet — da sie lediglich Kräfte in Schienenlängsrichtung übertragen muß — ein loses Auflager für die Brücke 28.

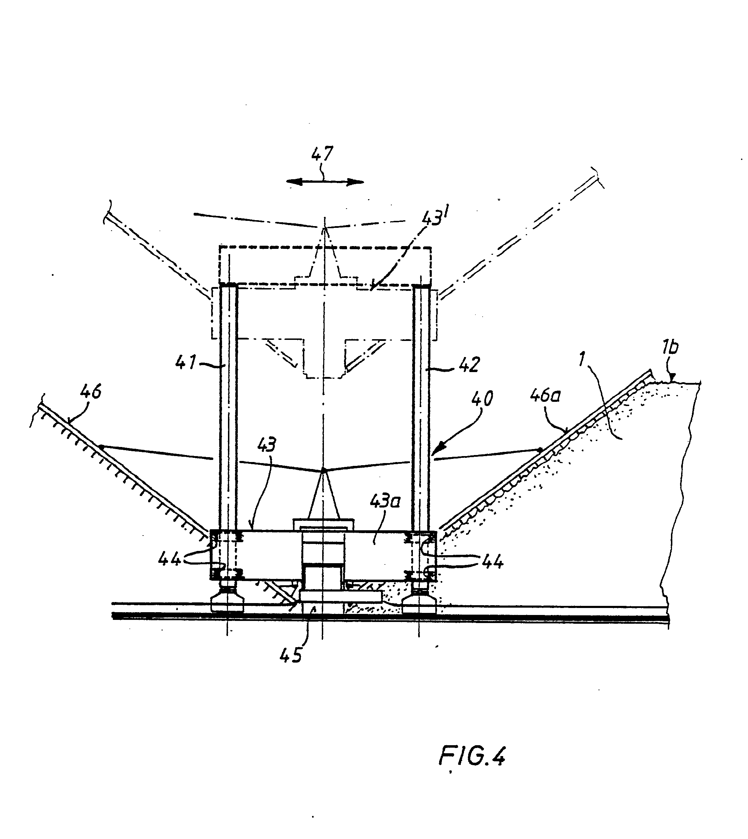

Eine andere Möglichkeit für die konstruktive Ausbildung insbesondere der vertikalen Führung für die mittels Hubeinrichtungen über die maximale Schütthöhe der Schüttguthalden anhebbare Brücke ist in Fig. 4 veranschaulicht. Da in diesem Falle die Hubeinrichtungen gleichartig ausgeführt sein können, wie es anhand der vorhergehenden Beispiele beschrieben worden ist, und auch die Höhe der Anhebbarkeit von Brücke und der von ihr getragenen Teile der Zuvorgesagten entspricht, beschränkt sich die folgende Erläuterung des Beispieles gemäß Fig. 4 auf die wesentlichen Merkmale.

Während bei beiden vorhergehenden Beispielen die auf jeder Längsseite des Schüttgutlagers verfährbar angeordneten Trägstützen so ausgebildet sind, daß sie gesonderte Vertikalführungen bzw. Führungsstangen besitzen, ist bei diesem dritten Ausführungsbeispiel jede Tragstütze 40 (nur eine ist veranschaulicht) im wesentlichen durch zwei vertikale Säulen 41, 42 gebildet, die nahezu über ihre ganze Höhe einen gleichbleibenden Querschnitt, vorzugsweise einen Kreis- oder Quadrat-Querschnitt, aufweisen. Diese beiden Säulen 41, 42 der Tragstützen 40 sind auf ihren Außenseiten so bearbeitet, daß sie in diesem Falle gleichzeitig die Vertikalführung für die Brücke 43 bilden. Die mit diesen vertikalen Führungssäulen 41, 42 zusammenwirkenden Querenden 43a der Brücke 43 weisen den Säulen 41, 42 zugeordnete Führungsausnehmungen auf, die vorzugsweise in Form von Lagerbohrungen (Gleitlager) 44 ausgebildet sind und in denen die jeweils zugehörige Säule 41 bzw. 42 aufgenommen ist.

Die Brücke 43 trägt hierbei — genau wie in den vorhergehenden Beispielen — wiederum einen quer über die ganze Lagerbreite verlaufenden Querförderer 45 und in diesem Falle zwei Böschungsräumgeräte 46, 46a, die beide gleichartig ausgeführt sein können, jedoch entgegengesetzten Stirnseiten der Brücke 43 zugeordnet sind und dadurch entgegengerichtete Haldenstirnseiten abbauen können.

Die Brücke 43 mit den von ihr getragenen Teilen kann auch hier wiederum so hoch angehoben werden (vgl. strichpunktierte Lage 43'), daß sie sich oberhalb der maximalen Schüttguthöhe 1b der Schüttguthalden 1 befindet und somit eine oder mehrere Schüttguthalden eines Schüttgutlagers in der einen oder anderen Längsrichtung (vgl. Doppelpfeil 47) überfahren kann.

Was die Zusammenordnung und Konstruktion der Tragstützen 40 anbelangt, so können die vertikalen Säulen 41, 42 — wie gestrichelt angedeutet — noch durch einen zusätzlichen oberen Träger miteinander verbunden sein und außerdem können die auf beiden Lagerlängsseiten vorgesehenen Tragstützen 40 — beispielsweise ähnlich wie im Beispiel der Fig. 1 — durch einen zusätzlichen Querträger portalartig zusammengefäßt sein.

Während sich für Hubeinrichtungen, die im mittleren Bereich eines Portalquerträgers vorgesehen sind, Seil- und Kettenzüge bevorzugt anbieten, können die an den seitlichen Tragstützen vorgesehenen und den Vertikalführungen zugeordneten Hubeinrichtungen auch als Gewindespindel — oder Zahnstangenantriebe an sich bekannter Konstruktionen ausgebildet sein, wobei zumindest beim Gewindespindelantrieb die Gewindespindel selbst jeweils gleichzeitig auch als Vertikalführung ausgeführt sein könnte.

**Patentansprüche**

1. Vorrichtung zur Rückverladung von losem Schüttgut von einem Schüttgutlager, das mehrere in Längsrichtung hintereinanderliegende Schüttguhalden (1) aufweist, enthaltend einen an der Haldenstirnseite (1a) angeordneten Brückenkratzer, bestehend aus einer Brücke (8), einem von der Brücke (8) getragenen, längs der Haldenstirnseite (1a) hin- und herverfahrbaren Böschungsräumgerät (10) sowie einem gleichfalls von der Brücke (8) getragenen Querförderer (11), dadurch gekennzeichnet, daß die Brücke (8, 28, 43) einschließlich Böschungsräumgerät (10, 30, 46, 46a) und Querförderer (11, 31, 45) an Vertikalführungen (13a, 13b, 23a, 23b, 41, 42) angeordnet und mittels Hubeinrichtungen (14a, 14b, 24a, 24b) bis über die maximale Schütthöhe (1b) der Schüttguthalden (1) anhebbar ist.

2. Vorrichtung nach Anspruch 1, dadurch gekennzeichnet, daß auf beiden Längsseiten (2a, 2b) des Schüttgutlagers je eine auf den Schienen (3a, 3b) verfahrbare, vertikal ausgerichtete, wenigstens eine der Vertikalführungen (13a, 13b, 23a, 23b, 41, 42) enthaltende Tragstütze (6a, 6b, 26a, 26b, 40) angeordnet ist, wobei beide Tragstützen zur Aufnahme von Arbeits- und Windkräften ausgebildet sind, während nur die auf der einen Lagerlängsseite (2b) vorgesehene Tragstütze (6b, 26b) zusätzlich zur Aufnahme von quer zur Schienenrichtung auftretenden Querkräften ausgelegt ist.

3. Vorrichtung nach Anspruch 2, dadurch gekennzeichnet, daß die Hubeinrichtungen (14a, 14b, 24a, 24b) an den Tragstützen (6a, 6b, 26a, 26b) angeordnet sind.

4. Vorrichtung nach Anspruch 2, dadurch gekennzeichnet, daß die Vertikalführungen (13a, 13b) an einem das Schüttgutlager in Querrichtung überspannenden Portal (4) angeordnet sind, dessen auf beiden Längsseiten (2a, 2b) des Schüttgutlagers auf den Schienen (3a, 3b) verfahrbare Portalbeine (6a, 6b) die die Vertikalführungen enthaltenden Tragstützen bilden und oberhalb der maximalen Schütthöhe (1b) der Schüttguthalden (1) durch einen Portal-Querträger (7) miteinander verbunden sind.

5. Vorrichtung nach Anspruch 4, dadurch gekennzeichnet, daß die Hubeinrichtungen (14a', 14b') oder zusätzliche Hubeinrichtungen für die Brücke (6) vom Portal-Querträger (7) getragen werden.

6. Vorrichtung nach Anspruch 2, dadurch gekennzeichnet, daß die Brücke (28) an der für die zusätzliche Aufnahme von Querkräften ausgelegten Tragstütze (26b) über zwei mit vertikalem Abstand voneinander angebrachte Führungsteile (28b, 28c) an der zugehörigen Vertikalführung (23b) gehaltert ist, während sie an der auf der anderen Lagerlängsseite (2a) vorgesehenen Tragstütze (26a) lediglich durch einen Führungsteil (28a) an der dortigen Vertikalführung (23a) geführt ist.

7. Vorrichtung nach Anspruch 2, dadurch gekennzeichnet, daß jede auf einer Längsseite des Schüttgutlagers vorgesehene Tragstütze (40) im wesentlichen durch wenigstens eine vertikale, über den größten Teil ihrer Höhe einen gleichbleibenden Querschnitt aufweisende Säule (41, 42) gebildet ist, die mit ihren Außenseiten gleichzeitig die Vertikalführung für die Brücke (43) bildet, wobei die Querenden (43a) der Brücke Führungsausnehmungen (44) aufweisen, in denen die jeweils zugehörige Säule gleitbeweglich aufgenommen ist.

8. Vorrichtung nach Anspruch 1, dadurch gekennzeichnet, daß die Hubeinrichtungen (14a, 14b, 14a', 14b', 24a, 24b) durch motorisch angetriebene Seil- oder Kettenzüge gebildet sind.

9. Vorrichtung nach Anspruch 3, dadurch gekennzeichnet, daß die an den Tragstützen (6a, 6b, 26a, 26b) vorgesehenen Hubeinrichtungen (14a, 14b, 24a, 24b) als Seil- oder Kettenzüge, als Gewindespindelantriebe oder als Zahnstangenantriebe ausgebildet sind.

## Claims

1. Device for reclaiming loose bulk material from a loose material store having a plurality of heaps of loose material (1) lying one behind another, the said device containing a bridge scraper at the front end of the heap consisting of a bridge (8), a slope clearing device (10) which is supported by the bridge (8) and is movable to and from along the front end (1a) of the heap, and a transverse conveyor (11) which is also supported by the bridge (8), characterised in that the bridge (8, 28, 43) including the slope clearing device (10, 30, 46, 46a) and the transverse conveyor (11, 31, 45) is arranged on vertical guides (13a, 13b, 23a, 23b, 41, 42) and can be raised by means of lifting arrangements (14a, 14b, 24a, 24b) above the maximum height (1b) of the heap of loose material (1).

2. Device as claimed in claim 1, characterised in that a supporting column (6a, 6b, 26a, 26b, 40) is arranged on each long side (2a, 2b) of the loose material store, movable on the rails (3a, 3b), aligned vertically and contains at least one of the vertical guides (13a, 13b, 23a, 23b, 41, 42), both supporting columns being constructed so as to absorb working and wind forces, whilst only the supporting column (6b, 26b) provided on one long side (2b) of the store is additionally designed to absorb transverse forces occurring at right angles to the direction of the rails.

3. Device as claimed in claim 2, characterised in that the lifting arrangements (14a, 14b, 24a, 24b) are arranged on the supporting columns (6a, 6b, 26a, 26b).

4. Device as claimed in claim 2, characterised in that the vertical guides (13a, 13b) arranged on a gantry (4) which spans the loose material store in the transverse direction, in which the legs (6a, 6b) of the gantry which are movable on the rails (3a, 3b) on both long sides (2a, 2b) of the loose material store form the supporting columns containing the vertical guides and are connected to one another above the maximum height (1b) of the loose material heap (1) by a gantry cross-beam (7).

5. Device as claimed in claim 4, characterised in that the lifting arrangements (14a', 14b') or additional lifting arrangements for the bridge (8) are supported by the gantry cross-beam (7).

6. Device as claimed in claim 2, characterised in that the bridge (28) on the supporting column (26b) designed for the additional absorption of transverse forces is retained on the appertaining vertical guide (23b) by means of two guide parts (28b, 28c) which are mounted so as to be vertically spaced from one another, whereas on the supporting column (26a) provided on the other long side (2a) of the store it is merely guided by a guide part (28a) on the vertical guide (23a) there.

7. Device as claimed in claim 2, characterised in that each supporting column (40) provided on a long side of the loose material store is formed essentially by at least one vertical pillar (41, 42) having a constant cross-section over the greater part of its height which at the same time forms the vertical guide for the bridge (43) with its outer surfaces, the transverse ends of the bridge having guide recesses (44) in each of which the appertaining pillar is received so as to be slidably movable.

8. Device as claimed in claim 1, characterised in that the lifting arrangements (14a, 14b, 14a', 14b', 24a, 24b) are formed by motor-driven cable lines or chain hoists.

9. Device as claimed in claim 3, characterised in that the lifting arrangements (14a, 14b, 24a, 24b) provided on the supporting columns (6a, 6b, 26a, 26b) as cable lines or chain hoists are constructed as threaded spindle drives or as rack and pinion drives.

## Revendications

1. Dispositif de reprise de matière en vrac incohérente dans un entrepôt qui en contient plusieurs tas (1) situés les uns derrière les autres dans la direction longitudinale, dispositif comprenant un gratteur situé sur un côté extrême (1a) d'un tas et se composant d'un pont (8), d'un scarificateur de talus (10) supporté par le pont (8) et capable de se déplacer alternativement le long de la face extrême (1a) du tas, ainsi que d'un convoyeur transversal (11) également supporté par le pont (8), dispositif caractérisé en ce que le pont (8, 28, 43) ainsi que le scarificateur de talus (10, 30, 46, 46a) et le convoyeur transversal (11, 31, 45) sont disposés sur des guides verticaux (13a, 13b, 23a, 23b, 41, 42) et peuvent être soulevés au moyen de dispositifs de levage (14a, 14b, 24a, 24b) jusqu'au-dessus de la hauteur maximale de déversement (1b) des tas de matière en vrac (1).

2. Dispositif selon la revendication 1, caractérisé en ce qu'un support (6a, 6b, 26a, 26b, 40) déplaçable sur un rail (3a, 3b), orienté verticalement et comprenant au moins l'un des guides verticaux (13a, 13b, 23a, 23b, 41, 42) est disposé le long de chacun des deux côtés longitudinaux (2a, 2b) de l'entrepôt de matière en vrac, ces deux supports étant réalisés de manière à pouvoir absorber les forces de travail et du vent, tandis que seul le support (6b, 26b) prévu sur l'un des côtés longitudinaux (2b) de l'entrepôt est conçu de manière à pouvoir absorber en plus les forces transversales s'exerçant perpendiculairement à la direction des rails.

3. Dispositif selon la revendication 2, caractérisé en ce que les dispositifs de levage (14a, 14b, 24a, 24b) sont disposés sur les supports (6a, 6b, 26a, 26b).

4. Dispositif selon la revendication 2, caractérisé en ce que les guides verticaux (13a, 13b) sont montés sur un portique (4) enjambant transversalement l'entrepôt de matière en vrac et dont les montants (6a, 6b) déplaçables sur les rails (3a, 3b) sur les deux côtés longitudinaux (2a, 2b) de l'entrepôt forment les supports comportant les guides verticaux et sont reliés par une poutre transversale de portique (7) au-dessus de la hauteur maximale de déversement (1b) des tas de matière en vrac (1).

5. Dispositif selon la revendication 4, caractérisé en ce que la poutre transversale de portique (7) supporte les dispositifs de levage (14a', 14b') ou des dispositifs auxiliaires de levage du pont (8).

6. Dispositif selon la revendication 2, caractérisé en ce que le pont (28) est retenu sur le guide vertical correspondant (23b) par deux éléments de guidage (28b, 28c) placés verticalement à distance l'un de l'autre sur le support (26b) conçu pour absorber accessoirement les forces transversales, alors qu'il n'est guidé le long du support (26a) prévu sur l'autre côté longitudinal (2a) de l'entrepôt que par un élément (28a) sur le guide vertical correspondant (23a).

7. Dispositif selon la revendication 2, caractérisé en ce que chaque support (40) prévu sur un côté longitudinal de l'entrepôt de matière en vrac est formé essentiellement par au moins une colonne verticale (41, 42) présentant sur la majeure partie de sa hauteur une section constante et dont les côtés extérieurs forment également le guide vertical du pont (43), les extrémités transversales (43a) du pont comportant des logements de guidage (44) dont chacun reçoit à coulissement la colonne correspondante.

8. Dispositif selon la revendication 1, caractérisé en ce que les dispositifs de levage (14a, 14b, 14a', 14b', 24a, 24b) sont formés de trains de câbles ou de chaînes à commande par moteur.

9. Dispositif selon la revendication 3, caractérisé en ce que les dispositifs de levage (14a, 14b, 24a, 24b) prévus sur les supports (6a, 6b, 26a, 26b) sont conçus sous la forme de trains de câbles ou de chaînes, de commandes à tige filetée ou de commandes à crémaillère.

FIG.1

FIG.2

FIG.3

FIG.4